Europäisches Patentamt

European Patent Office

Office européen des brevets

(11) Publication number: **0 323 688**
**A1**

## EUROPEAN PATENT APPLICATION

(21) Application number: 88300132.3

(22) Date of filing: 08.01.88

(51) Int. Cl.⁴: G01S 7/46

(43) Date of publication of application:
12.07.89 Bulletin 89/28

(84) Designated Contracting States:
DE FR IT NL SE

(71) Applicant: THE GENERAL ELECTRIC
COMPANY, p.l.c.
1 Stanhope Gate
London W1A 1EH(GB)

(72) Inventor: Richards, Gordon Alan
95 Crocus Way
Chelmsford Essex CM1 5XH(GB)

(74) Representative: Tolfree, Roger Keith
GEC p.l.c. Central Patent Department
Chelmsford Office Marconi Research Centre
West Hanningfield Road
Great Baddow Chelmsford Essex CM2
8HN(GB)

(54) Tracking systems.

(57) A tracking system predicts the future path and positions of an object, a number of possible positions (7-10) for the object are then received. The tracking system calculates the probability of each of the possible positions (7-10) being the correct position of the object based on, the distance between the predicted position (6) of the object and each of the possible positions (7-10) and which side of the predicted track (5) the possible positions and earlier plots (1-4) of the objects position are on. The tracking system then selects the most probable of the possible positions as being correct.

Fig 1B

## Tracking Systems

This invention relates to tracking systems which periodically receive data defining the position of a moving object and use this data to predict the future movements of the object.

A problem with such systems is that usually, due to unpredicted variations in the objects motion, the objects' future position will not be what was predicted and so if the data gives a number of possible positions for the object the tracking system must decide which of them is the correct one.

In a radar system, for example, there could be a number of returns similar to that from the object being tracked due to noise or the presence of other objects.

One known method of doing this is to use an algorithm to find the best fitting curve to the past positions of the object, to calculate where on this curve the object will be when the next set of data is received and then to take the possible position nearest this point as being the most probable one. This most probable point is then assumed to be the latest position of the object.

This invention provides a tracking system comprising: means for obtaining indications of objects; means for selecting from present indications one which is assumed to be from an object of interest; and means for deriving from previously selected past indications an assumed track of the object, characterised in that the means for selecting is designed to identify on which side of the assumed track each of selected past and each of the present indications lie and to use this information as one factor on which the selection made depends.

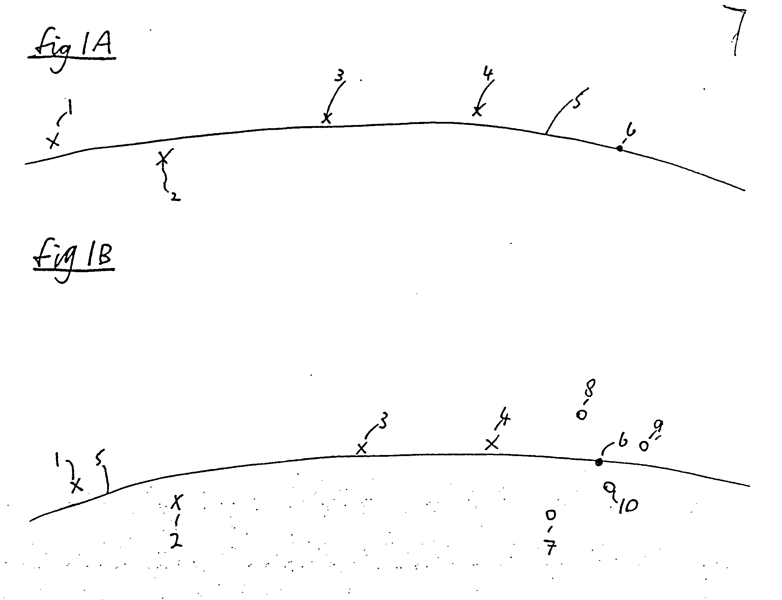

Referring to figure 1A, four sequential positions at equally spaced time intervals equal to one period of a scanning cycle of the tracking system 1,2,3,4 of an object are shown. Also shown is the curve 5 best fitting these positions and along which the object is assumed to be moving, and a predicted next point 6 for the object.

Figure 1B shows the situation when there are a number of points 7,8,9 and 10 that could be the latest position of the object. If we view the area above the curve 5 as positive and that below as negative, points 1,3,4,8 and 9 are positive (denoted by a '+') and points 2,7 and 10 are negative (denoted by a '-'). Using this notation the sequence of points 1 to 4 is;

bb      + - + +

The next point can be either + or - so the sequence for all 5 points can be either

     a) + - + + +

or

b) + - + + -

The probabilities of sequence a and sequence b occurring are different. The absolute probability of each will depend on the precise algorithm used to decide on the curve 5.

By giving each possible point 7,8,9,10 a probability depending both on which side of the curve the point is on and on it's distance from the predicted point it is a more accurate measure of the probability of each possible point being the next on the track can be obtained.

A preferred embodiment of the invention will now be described with reference to the accompanying figures in which;

Figure 2 shows a radar tracking system employing the invention in block diagram form; and

Figure 3 shows in more detail the block 17 of Fig. 2.

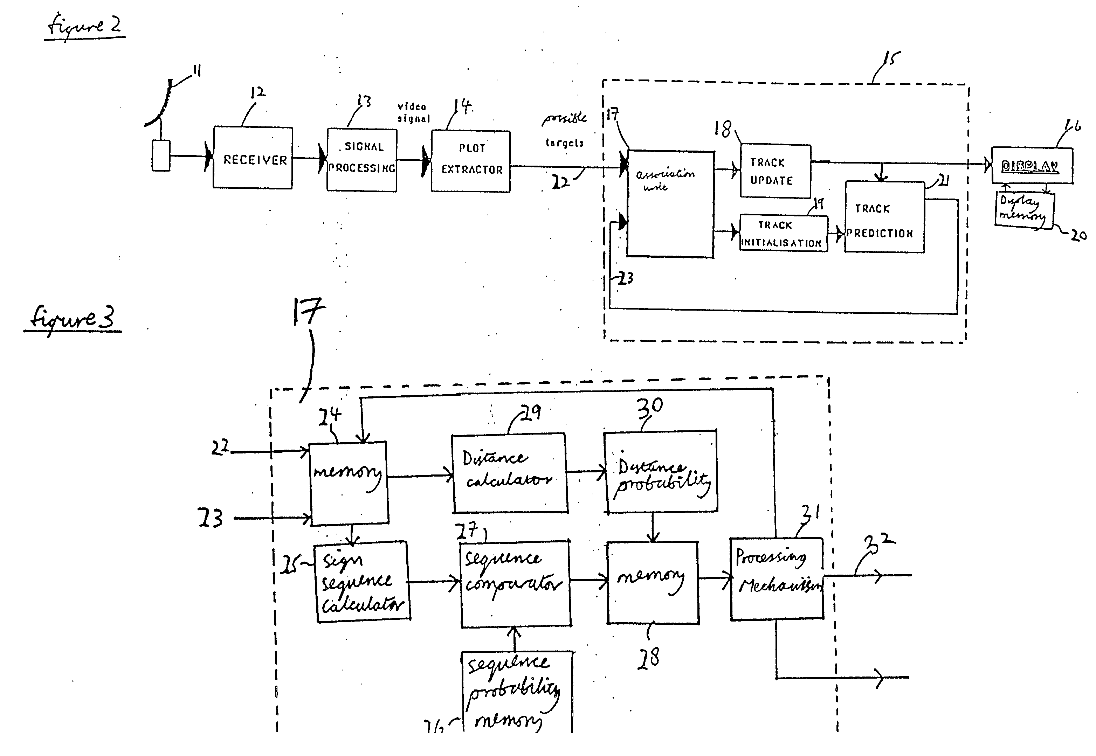

A radar system as shown in figure 2 includes an antenna 11 which scans an area under surveilance and which picks up radar signals reflected from a target, the source of these signals would usually be a transmitter (not shown) sharing the antenna 11 but they could have some other source.

The signals picked up by antenna 11 are fed to a receiver 12 for reception and amplification and then to a signal processing system 13 which puts them into video form. Such a signal processing systsem is well known and can follow the principals described in chapters 4,5,10 and 11 of the book "Introduction to Radar Systems " by Skolnik published by McGraw-Hill.

The video signals are then processed by a plot extractor 14 (the principles of which are similarly described in chapers 10 and 11 of the aforementioned book by Skolnik) which decides which parts of the video signals represent possible target plots and passes them on to a tracker 15. The remainder of the video signals are ignored.

The tracker 15 controls an operators display 16 which will usually show the latest position, past positions and track of each target within range of the radar system, it may also be wanted to show the predicted tracks of some or all of the targets and the positions of any significant fixed objects such as areas prohibited to targets of particular type.

The possible target positions are supplied to a plot-track association unit 17 which calculates the probability of each possible position being the latest position of each target.

The plot-track association unit 17 supplies data in digital form to the track update processor 18 identifying the co-ordinators of the position identified at 17 as having the highest probability for each target. However, if the probability of any of the positions being the latest position of a target is below a pre-set threshold the association unit 17 assumes that either the has manouvered so that the curve used to predict the targets track is no longer valid or that a possible new target has appeared and feeds to the track initialiser 19 the co-ordinates of the said positions.

The track initialiser 19 will gather data over a number of scanning cycles of the antenna 11 until it can new target has appeared and feeds to the track initialiser 19 the said co-ordinates of the positions.

The track initialiser 19 will gather data over a number of scanning cycles of the antenna 11 until it can calculate a new track for new targets or a target that has carried out a manouver. This procedure is standard practice in all tracking radars.

Track update processor 18 processes the received co-ordinates to produce an output indicating the best estimate of the latest co-ordinates of the target and produces a best fit curve to the co-ordinates, this is a standard feature in tracking radars. The track update processor 18 also supplies this data to the track prediction unit 21, which is also supplied with data describing new tracks by the track initialiser 19.

The past positions of targets and information on fixed objects are held in a display memory 20 and supplied to operator display 16 as needed, as is well known.

The track prediction unit 21 (also of well known design) uses the data supplied to it by track update memory 18 and track initialiser 19 to predict where each target should be along its track during the next radar scan and supplies this information to the association unit 17.

The association unit 17 is, in this particular embodiment of the invention, a Programmed computer, in this case an XN10 computer manufactured by Marconi radar Systems Ltd its operation is schematically, shown in figure 3. The

The data on lines 22 and 23 are fed into a memory 24. The memory 24 also contains the positions of each target for the last four radar scans.

The memory 24 supplies the track, last four positions and all possible plots for each target in turn to a sign sequence calculator 25. The sequence calculator 25 assigns one side of the track as positive and the other as negative and produces a sign sequence for each possible plot. This sign sequence is compared with the contents of sequence probability memory 26 by sequence comparator 27. The sequence probability memory 26 is a permanent memory containing the probability of each sequence of five target positions, the probability of each sequence will depend on the algorithm used by the track initialisation unit 19 to calculate a new track from a series of plot points, but the probabilities can be calculated in advance for whatever algorithm the system uses. The probability of each point being the new position of the target is then stored in a memory 28.

Memory 24 also supplies the information received on line 23 and the positions of all the possible plots to a distance calculator 29 which calculates the distance of each possible plot from the predicted target position and then gives this information to a distance probability unit 30. The distance probability unit 30 assigns a probability to each distance value, the relationship between distance and probability will depend on the algorithm used by the track initialisation unit 19 and track update processor 18. These probability values ar also stored in the memory 28.

This processing is carried out for each target in turn. When all the targets have been processed memory 28 contains two probability values for each possible plot being the latest position of each target, these values are combined by multiplication in a processing mechanism shown schematically at 31 to give a single probability of each possible plot being the latest position of each target.

The processing mechanism 31 selects the most probable combination of targets and possible plots giving each target one possible plot as its latest position, it does not simply pick the most probable possible plot for each target because this could result in one possible plot being taken as the latest position of a plurality of targets. These most probable new target positions are supplied to memory 24, where they are stored as part of the latest target positions ready for the next radar scan, and along line 32 to the track update memory 18. Additionally if any possible position has a probability less than a threshold value of being the latest position of a target the computer 31 activates the track initialiser 19 and gives it the co-ordinates of that position.

## Claims

1. A tracking system comprising: means for obtaining indications of objects; means for selecting from present indications one which is assumed to be from an object of interest; and means for deriving from previously selected past indications an assumed track of the object, characterised in that the means for selecting is designed to identify on which side of the assumed track each of the selected past and each of the present indications lie and to use this information as one factor on which the selection made depends.

2. A tracking system as claimed in claim 1 and additionally comprising; means for calculating the probability of each present indication being from an object of interest, one factor in the calculation of these probabilities being on which side of the assumed track the selected past and the present indications lie, and means for selecting the most probable present indication.

3. A tracking system as claimed in claim 2 and additionally comprising; means to derive assumed tracks for a plurality of objects of interest, and means to calculate the probability of each present indication being from each object of interest and means to select the most probable correspondence of present indications to objects of interest.

4. A tracking system as claimed in claim 2 or 3 and additionally comprising means which reject the assumed track for an object of interest and calculate a new assumed track for this object of interest if the selected present indication has a probability below some threshold value.

5. A tracking system as claimed in any preceding claim in which indications of objects are obtained by radar.

fig 1A

fig 1B

figure 2

figure 3

EP 0 323 688 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | COLLOQUE INTERNATIONAL ELECTRONIQUE ET AVIATION CIVILE, Paris, 26th-30th June 1972, pages 203-210, Paris, FR; D. MARCHAND: "4P - Comparaison entre diverses méthodes de poursuite"<br>* Whole document * | 1,5 | G 01 S 7/46 |
| A | PROCEEDINGS OF THE 1986 AMERICAN CONTROL CONFERENCE, Seattle, 18th-20th June 1986, pages 889-898; R.J. FITZGERALD: "Development of practical PDA logic for multitarget tracking by microprocessor"<br>* Abstract; page 893, paragraph 10, "Nearest-neighbor PDA" - page 897, paragraphe 11 * | 1,5 | |
| A | IEE INTERNATIONAL CONFERENCE ON RADAR PRESENT AND FUTURE, London, 23rd-25th October 1973, pages 303-310; H. EBERT: "Parallel processing of radar information by associative processors"<br>* Pages 306-308, paragraph 2.2, "Automatic target tracking" * | 1,5 | TECHNICAL FIELDS SEARCHED (Int. Cl.4)<br><br>G 01 S |
| A | DE-C-1 298 587 (TELEFUNKEN)<br>* Figures 3,4; column 3, line 67 - column 4, line 59 * | 1,5 | |

The present search report has been drawn up for all claims

| Place of search | Date of completion of the search | Examiner |
|---|---|---|
| THE HAGUE | 02-09-1988 | BLONDEL F.J.M.L.J. |